(19) **Europäisches Patentamt / European Patent Office / Office européen des brevets**

(11) **EP 4 711 812 A1**

(12) **EUROPEAN PATENT APPLICATION**

(43) Date of publication:
18.03.2026 Bulletin 2026/12

(21) Application number: 24200768.0

(22) Date of filing: 17.09.2024

(51) International Patent Classification (IPC):
*G01S 13/00* (2006.01)     *G01S 13/34* (2006.01)
*G01S 13/58* (2006.01)     *G01S 13/87* (2006.01)
*G01S 7/40* (2006.01)     *G01S 13/931* (2020.01)

(52) Cooperative Patent Classification (CPC):
**G01S 13/343; G01S 7/4021; G01S 13/003;
G01S 13/584; G01S 13/87; G01S 13/931;
H03B 2200/009**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: NXP B.V.
**5656 AG Eindhoven (NL)**

(72) Inventors:
• **Bekooij, Marco Jan Gerrit
5656AG Eindhoven (NL)**
• **Koppelaar, Arie Geert Cornelis
5656AG Eindhoven (NL)**
• **Lok, Pieter
5656AG Eindhoven (NL)**

(74) Representative: **Hardingham, Christopher Mark
NXP Semiconductors
Intellectual Property Group
The Cattle Barn
Upper Ashfield Farm, Hoe Lane
Romsey, Hampshire SO51 9NJ (GB)**

(54) **A DISTRIBUTED COHERENT RADAR SYSTEM AND APPARATUS**

(57)     Disclosed is a DCR system comprising: first and second radar units and a processer, the radar units each comprising: first and second antennas, aligned in a first direction, and offset in a second, orthogonal, direction, and a linear array of antennas distributed along the first direction and including the first or second antenna; wherein: the second radar unit is configured to receive, at is second antenna, a first signal, being a reflection, from a target, of a first FMCW signal transmitted by the first radar unit first antenna; the first radar unit is configured to receive, at its second antenna, a second signal, being a reflection, from the target, of a second FMCW signal transmitted by the second radar unit first antenna; and the processor is configured to estimate phase noise from the first signal and the second signal.

Fig. 5

EP 4 711 812 A1

**Description**

FIELD OF THE DISCLOSURE

The present disclosure relates to distributed coherent radar systems.

BACKGROUND

A distributed radar is one in which two or more individual units, commonly referred to as radar units or radar heads, are used as part of a single radar. A distributed coherent radar (DCR) system requires synchronization in time, frequency and phase between the individual radar units. Such synchronization can typically be achieved or enabled by use of a single oscillator, typically provided by a central unit, to each of the distributed radar units. Alternatively, each radar unit may have its own local oscillator (LO), and a method is provided to synchronize or align the local oscillators.

Irrespective of how the synchronization is provided, there can exist noise on the phase of the individual radar signals transmitted from and received by the multiple antennas associated with a DCR system. Similar to other noise in the system, the phase noise tends to reduce the detection performance of the radar by masking targets and particularly targets with small cross-section - that is to say, targets which produce relatively weak return signals. The phase noise may be introduced by the oscillators, such as crystal oscillators or synthesizers in each radar unit. Because of this, and in particular where local oscillators are used, the phase noise from the different radar units may be uncorrelated. Consequently, during down mixing in the receiver, instead of being attenuated, the phase noise adds. The attenuation of phase noise during the down mixing of signals with correlated phase noise results in a radar system in which the phase noise is not a significant source of error. In contrast for systems such as DCR systems in which the phase noise is uncorrelated, the error can be significant and produce a noticeable reduction in detection performance.

If the phase noise is known, or if a reasonable estimate of the phase noise may be made, techniques are becoming available to attenuate the phase noise in the received signals.

SUMMARY

According to a first aspect of the present disclosure, there is provided a distributed coherent radar, DCR, system comprising: a first radar unit, a second radar unit and a processer, wherein the first radar unit and the second radar unit each comprise: a first antenna and a second antenna, aligned in a first direction, and offset in a second direction which is orthogonal to the first direction; and a linear array of antennas distributed along the first direction, and including a one of the first antenna and the second antenna; wherein: the second radar unit is configured to receive, at the second radar unit second antenna, a first signal, being a reflection, from a target, of a first frequency modulated continuous wave, FMCW, radar signal transmitted by the first radar unit first antenna; the first radar unit is configured to receive, at the first radar unit second antenna, a second signal, being a reflection, from the target, of a second FMCW radar signal transmitted by the second radar unit first antenna; and the processor is configured to estimate phase noise from the first signal and the second signal. Such a configuration enables estimation of phase noise without requiring that one of the antennas of each of the first and second radar units is configured to act as both transmitter and receiver. Reduction in complexity, cost, and coupling between Rx and Tx may thereby be achieved since a circulator or power divider may be avoided.

In one or more embodiments, the antennas are each elongate along the second direction. This may limit or reduce the field of view (FOV) in the second direction. Typically, and particularly for applications such as automotive radar, a wider FoV is not required in the second direction, which is typically a vertical direction (elevation).

In one or more embodiments, the DCR system is configured to have an azimuth angle and an elevation angle, wherein the first direction is a tangent to the azimuth angle and the second direction is a tangent to the elevation angle.

In one or more embodiments, the DCR system is configured to operate over an azimuth angular range of at least 90°. Such a wide angular azimuth range, or field of view, may be particularly beneficial in systems such as automotive radar systems. The type and design of the individual antennas, together with their position in the array may be chosen so as to allow such a wide operational range.

In one or more embodiments, the first radar unit and the second radar unit each comprise a local oscillator. In other embodiments, the same oscillator may be used to provide the signal for both radar units.

In one or more embodiments, the processor is comprised in a one of the first radar unit and the second radar unit. One of the radar units may thus be considered to be a "fat radar head". In other embodiments, the processor is a separate unit, thereby potentially reducing the bill of materials since the radar units may then be replicas of each other.

In one or more embodiments, the linear array of antennas is a sparse array. Using a sparse array may reduce the overall processing requirements since fewer antenna signals require to be processed.

In one or more embodiments, the linear array of antennas is a row of a matrix array of antennas, and the further antenna is a one of a further row of the matrix array of antennas. In one or more embodiments, matrix array has two rows.

In one or more embodiments, linear array of antennas is an array of receive antennas.

In one or more embodiments, the first and second radar units each comprise an integrated circuit configured to pre-process the respective first and second signal. Pre-processing the respective signal may comprise down-converting the respective signal by mixing it with the respective FMCW radar signal. Pre-processing the respective signal may comprise sampling the down-converted signal by an analog-to-digital converter, ADC. In one or more embodiments, the processor is configured to estimate the phase noise before determining a range-Doppler map of candidate targets including the target, which may be beneficial, since the input signal to the phase noise estimator is the beat-signal from the two units as produced by the ADC . In other embodiments, the processor is configured to estimate the phase noise after determining a range-Doppler map of candidate targets including the target, in which embodiments reprocessing is generally needed after phase noise cancellation. In some embodiments, the mono-static and bi-static responses are first separated, and the estimation the phase noise is made only for the bi-static response.

According to a second aspect of the present disclosure, there is provided distributed coherent radar, DCR, system comprising: a first radar unit, a second radar unit and a processer, wherein the first radar unit and the second radar unit each comprise: a local oscillator, a linear array of antennas distributed along a first direction, a further antenna aligned with a first antenna of the linear array of antennas along the first direction, and offset therefrom in a second direction which is orthogonal to the first direction; wherein a first transmission path length between the first radar unit first antenna and the second radar unit further antenna, via a target, is equal to a second transmission path length between the second radar unit first antenna and the first radar unit further antenna, via the target. Since the equal path length property applies to a pair of radar heads, the concept may also be applicable to systems including more than two radar heads or radar units, i.e. a multistatic radar system.

## BRIEF DESCRIPTION OF THE DRAWINGS

Reference will now be made to the accompanying drawings, which are not necessarily drawn to scale, and wherein:

FIG. 1 shows, schematically, a side view of an arrangement having first and second radar units;
FIG. 2 shows views of one radar unit, and signal paths, of an arrangement such as that shown in in FIG. 1;
FIG. 3 shows, schematically, a side view of another arrangement of first and second radar units;
FIG. 4 shows views of one radar unit, and signal paths, of an arrangement such as that shown in in FIG. 3;
FIG. 5 shows, schematically, a radar unit consistent with embodiments of the present disclosure along with signal paths associated with the radar units;
FIG. 6 shows, schematically, a side view of a DCR system according to embodiments of the present disclosure;
FIG. 7 illustrates, schematically, a pair of radar units, according to one or more embodiments, having arrays of transmit and receive antennas;
FIG. 8 shows a pair of antenna unit boards, each of which include a sparse transmit array and a sparse receive array of antennas, according to one or more embodiments;
FIG. 9, shows, schematically, an isometric view of a radar system according to one or more embodiments; and
FIG. 10 shows schematically and isometric view of the radar system, detecting a target which is not in the *xy* plane of the radar units.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

## DETAILED DESCRIPTION

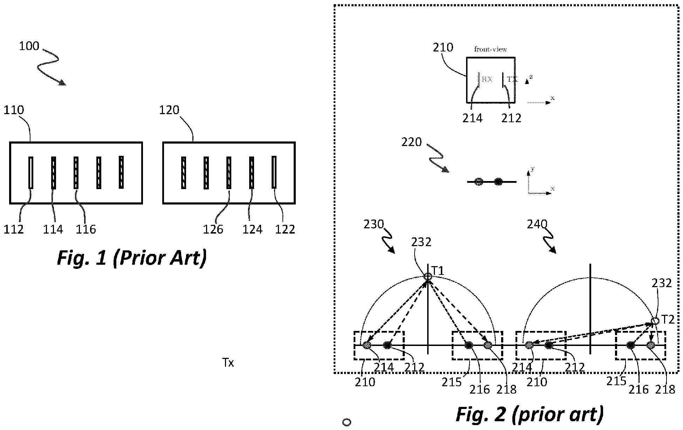

FIG. 1 shows, schematically, a side view of an arrangement 100 in which first radar unit 110 and a second radar unit 120 each comprise at least one transmit antenna Tx, 112 and 122 respectively, and at least one receive antenna Rx, 114, 116... and 124, 126... respectively. As will be familiar to the skilled person, the antennas are each typically elongate in a Z direction (that is, vertically, or up and down on the figure). The radar units 110 and 120 are arranged to be distributed horizontally (that is to say left-to-right in the figure), and are positioned at a same vertical height (that is to say, they are aligned vertically). Typically, the radar units are arranged in a mirror image configuration, so that, for example shown the Tx antenna 112 is the leftmost antenna of the left radar unit 110 and the Tx antenna 122 is the rightmost antenna of the right radar unit 120.

FIG. 2 shows a side view 210 of one radar unit of an arrangement such as that shown in in FIG. 1, except that in this case only a single receive antenna is shown. The figure also illustrates a top plan view at 220, and, at 230 and 240, two sets of paths corresponding to reflections from a target T 232 at two different azimuth angles T1 and T2 from the radar. The skilled person will appreciate that in practice the distance between each of the radar units 110 and 120 and the target T 232 is generally much larger than the distance between the radar units 110 and 120 themselves. As can be seen in the figure, for T1 with an azimuth angle of 0°, although the path 212 - T1 - 218 is different from the path 216 - T1 - 214, the paths are symmetrical and thus the path lengths are the same. However in the case of an azimuth angle which is significantly different from 0° such as that shown at T2, the path length 212 - T2 - 218 may be significantly different from the path length 216 - T2 - 214.

Denoting the signal received at 214 as $x_1(t)$ and that received at 214 as $x_2(t)$, then in the case of the path lengths being equal, such as for T1, in the absence of phase noise, the "beat" signal after down-mixing is simply:

$$x_1(t) = x_2(t) = e^{jw_{b1}t}, \tag{1}$$

where $\omega_{b1}$ represents the beat-frequency of target T1, and $\omega_{b1} = 2.\pi.f_{b1}$, where $f_{b1}$ is the beat-frequency, the value which relates to the distance of the target to the radar-unit. $f_{b1} = S.\tau$, S being the FMCW frequency ramp slope and $\tau$ being the time-of-flight from Tx --> T1 --> Rx. $\tau = 2R/c_0$ (R being the distance to the radar units, and $c_0$ speed-of-light).

In the presence of phase noise, which we denote $pn_{12}$ (in the path 212 - T1 - 218), and $pn_{21}$ (in the path 216 - T1 - 214), equation (1) this becomes:

$$x_1(t) = e^{j.pn_{12}(t)}.e^{jw_{b1}t}, \text{ and} \tag{2}$$

$$x_2(t) = e^{j.pn_{21}(t)}.e^{jw_{b1}t}. \tag{3}$$

Note that the phase noise signal $pn_{12}$ is a combination of phase noise p1(t) from TRX1 and phase noise p2(t) from TRX2: $pn_{12}(t) = p1(t) - p2(t)$, where p1(t) and p2(t) are independent phase noise signals and therefore the subtraction in the equation doesn't result in a reduction in phase noise but an increase of phase noise. Similarly, $pn_{21}(t) = p2(t) - p1(t)$, etc.

A phase noise estimation algorithm calculate a function $\psi(t)$ by multiplying the complex conjugate of the two signals: $\psi(t) = \arg ( x_1(t)x_2(t)^* )$. Then:

$$\psi(t) = \arg ( x_1(t)x_2(t)^* ) = \arg(e^{j.pn_{12}(t)}.e^{-j.pn_{12}(t)}) =$$
$$= \arg(e^{pn_{12}(t) - pn_{21}(t)}) = pn_{12}(t) - pn_{21}(t) \tag{4}$$

That is to say, for equal path lengths, the difference in phase noise can be determined, from which the phase noise can be estimated, and cancelled.

In particular, the estimated phase noise $\psi(t) = pn_{12}(t) - pn21(t) = p1(t) - p2(t) - p2(t) + p1(t) = 2(p1(t) - p2(t))$. Therefore, the cancellation of phase noise for signal $x_1(t)$ becomes $pn_{12}(t) - 0.5\psi(t) = 0$, and for $x_2(t)$ it is $pn21(t) + 0.5\psi(t) = 0$. The skilled person will appreciate that these are approximations of the true formulas, the exact formulas require inclusion of time-of-flight between transmission and reception. Including time-of-flight shows not a complete cancellation of phase noise, but only cancellation of the correlated part of the phase noise (the slowly varying part of it).

However, if the path lengths are different (such as that shown for target T2, then:

$$x_1(t) = e^{j.pn_{12}(t)}.e^{j\omega_{b1}t}, \text{ and} \tag{5}$$

$$x_2(t) = e^{j.pn_{21}(t)}.e^{j\omega_{b2}t}. \tag{6}$$

But $\omega_{b1} \neq \omega_{b2}$, and as a result, $\Psi(t)$ cannot be used to estimate the phase noise, using the above equations.

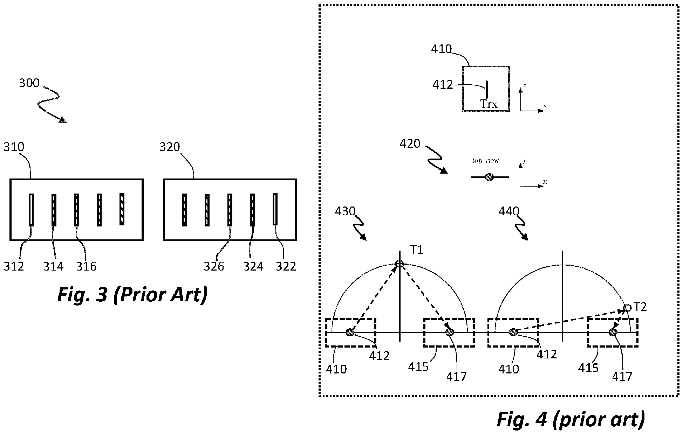

FIG. 3 shows, schematically, a side view of an arrangement 300 in which first radar unit 310 and a second radar unit 320 each at least one transmit antenna Tx, 112 and 122 respectively, and at least one receive antenna Rx, 314, 316... and 324, 326... respectively. This arrangement differs from that shown in FIG. 1, in that the respective Tx antenna in each radar unit is configured to also operate as one of the receive antennas. Thus antennas 312 and 322 may be described as transceive antennas (Trx). This configuration may ensure that path lengths are equal for any targets, as will be described in more detail with respect to FIG. 4. In order for the antennas 312 and 322 to act as Trx antennas, they require to be coupled to both a receive port and a transmit port of the radar unit front-end integrated circuit (IC). This requires additional circuitry such as a directional coupler or Wilkinson power divider. Both the additional circuitry and the additional coupling add both to the cost and complexity of the design, and to the losses of the system.

FIG. 4 shows a side view 410 of one radar unit of an arrangement such as that shown in in FIG. 3, except that in this case only a single receive antenna is shown. The figure also illustrates a top plan view at 420, and, at 430 and 440, two paths corresponding to a target T at two different azimuth angles T1 and T2 from the radar. As can be seen in the figure, for T1, since the transmit antenna is coincident (being in fact the same antenna, purposed differently during different part of the radar operation), the path length from radar unit 410 to radar unit 415 is the same, and specifically from Trx antenna 412 via the target to Trx antenna 417, is the same, irrespective of the azimuth of the target, eg T1 or T2.

The present inventors have appreciated that an alternative design and configuration of the antenna arrays may allow for phase noise estimation (thus facilitating cancellation of the effects of phase noise, thereby improving the detection performance of the radar) without the need for the cost and complexity of the additional components required to implement a TRX antenna in each radar unit.

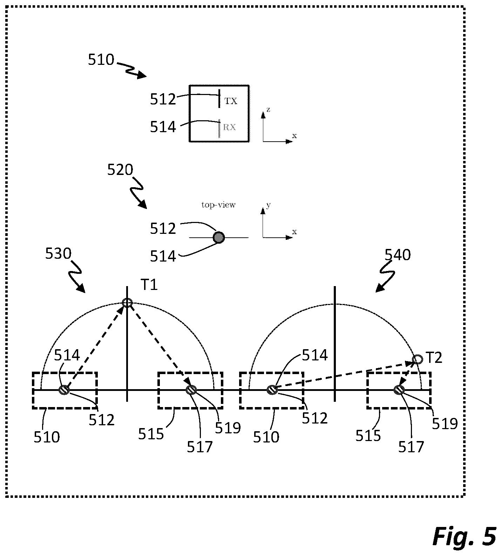

FIG. 5 shows, schematically, a radar unit consistent with embodiments of the present disclosure along with signal paths associated with the radar units. In particular, at 510 is shown a schematic side view of part of a radar unit, showing a first antenna 512 and a second antenna 514, aligned in a first direction and offset in a second direction which is orthogonal to the first direction. In the orientation shown in the figure, the first direction is a horizontal direction x (left/right in the figure), and the second direction is a vertical direction z (up/down in the figure). The first antenna 512 may be, as shown, a transmit antenna Tx, and the second antenna 514 may be as shown a receive antenna Rx. In other embodiments the receive and transmit antennas are switched such that the first antenna is a receive antenna Rx and the second antenna is a transmit antenna Tx. At 520 is shown a top view of the parts of the radar unit. Since the Tx 512 and Rx 514 antennas are aligned in the X direction, they overlay each other in this part of the figure. Thus receive antenna 514 is hidden below the transmit antenna 512.

At 530 and 540 are shown, schematically in plan view, the signal paths for radar signals to and from a pair of bi-static radar units 510 and 515, reflected from a target T which is either at an azimuth angle of 0° (T1, shown at 530) or at a large azimuth angle (T2, shown at 540). Receive antenna 514 is hidden below transmit antenna 512, and receive antenna 519 is hidden below transmit antenna 517. Similar to the depictions for the arrangements where the same antenna is used for both receive and transmit, the signal path length 512 - T1 - 519 is the same as the signal path length 517 - T1 - 514. And this is the case irrespective of the azimuth of the target so that, also, the signal path length 512 - T2 - 519 is the same as the signal path length 517 - T2 - 514.

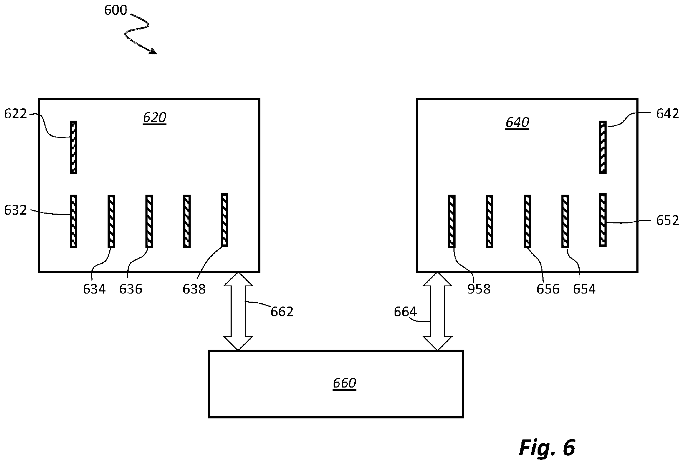

FIG. 6 shows, schematically, a side view of a distributed coherent radar, DCR, system 600 according to embodiments of the present disclosure. The DCR comprises a first radar unit 620, a second radar unit 640 and a processor 660. The first radar unit 620 comprises a first antenna, 622 and a second antenna 632. The first antenna 622 and second antenna 632 are aligned in a first direction (which is left/right as shown in figure), and offset in a second direction (up/down in the figure) which is orthogonal to the first direction. Similarly, the second radar unit 640 comprises a first antenna, 642 and a second antenna 652, which are also are aligned in the first direction, and offset in the second direction.

The first radar unit 620 further comprises a linear array of antennas 634, 636... 638, distributed along the first direction. A one of the first antennas - in this case the second antenna - forms part of the linear array. As shown it is the second antenna 632 which is one of the antennas of the linear array; however, in other embodiments it may be the first antenna 622 which is one of the antennas of the linear array.

Similarly, the first radar unit 640 further comprises a linear array of antennas 654, 656... 658, distributed along the first direction. A one of the first antenna and the second antenna forms part of the linear array. As shown, it is the second antenna 654 which forms part of the linear array; however, in other embodiments it may be the first antenna 642 which forms part of the linear array.

In operation the second radar unit 640 receives, at the second radar unit second antenna 652, a first signal, being a reflection, from a target, of a first frequency modulated continuous wave, FMCW, signal transmitted by the first radar unit first antenna 622. Similarly, the first radar unit 620 receives, at the first radar unit second antenna 632, a second signal, being a reflection, from the target, of a second FMCW signal transmitted by the second radar unit first antenna 642.

In operation the processor estimates phase noise in the first signal, second signal or both the first and second signal, from the first signal and the second signal. Once the phase noise has been estimated, the processor may use the estimation of the phase noise, to correct the signals for the phase noise.

The processor 660 may be a separate unit, or may be integral with one or other of the radar units 620 and 640. Thus the radar units 620 and 640 may be the same, or dissimilar. The radar signals transmitted from each of the first and second radar units 620 and 640 may typically be generated at the respective radar unit. In order to do so, each radar unit requires a defined frequency signal onto which to superimpose a chirp to form an FMCW radar signal. The defined frequency signal is generated by an oscillator. Each radar unit may have its own local oscillator, or may receive a signal from, or corresponding to, a remote oscillator. Thus a single oscillator may be provided for example in just one of the radar units 620 and 640, or the oscillator may be provided in the processor 660 although this is generally not preferred, and, in general, embodiments of the present disclosure do not rely on a central oscillator.

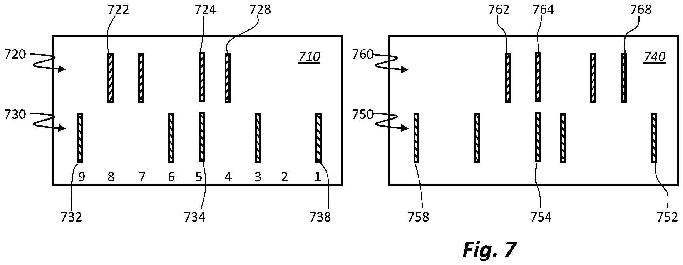

In the embodiments represented in FIG. 6, each radar unit comprises a single array of antennas (being one of a receiver array or a transmit array) and a single other antenna (being the other of a receive antenna or transmit antenna). FIG. 7 illustrates, schematically, a pair of radar units 710 and 740, according to one or more other embodiments, in which each of the radar units 710 and 740 comprise both an array of transmit antennas, 720 (at 722, 724,... 728), and 760 (at 762, 764,... 768) respectively, and an array of receive antennas, 730 (at 732, 734,... 738) and 750 (at 752, 754,... 758) respectively. Moreover, according to one or more embodiments, either or both of the antenna arrays (or the single array in a configuration such as shown in FIG. 6) may be so-called "sparse" arrays in which the separation between the individual antennas is not uniform. Sparse arrays will be familiar to the skilled person and comprise an array in which the separation between the individual antennas is not uniform, but instead the antennas are positioned at integer multiples of a predefined base spacing or separation. Thus, in the radar unit 710, transmit antennas are located at positions 4, 5, 7 and 8, and receive antennas are located at positions 1, 3, 5, 6, and 9. The specific configuration shown in FIG. 7 is provided for illustrative purposes only; the specific antenna positions, and number of antennas, within a sparse array will depend on the application.

As shown in the figure, there is at least one antenna location, along the linear array, which has both a transmit antenna and receive antenna (in FIG. 7 this is illustrated at location 5). This represents the first and second antenna in the radar unit as required by embodiments of the present disclosure. The skilled person will further appreciate that the antenna arrays, according to embodiments of the present disclosure, are not constrained to having only one pair of aligned transmit and receive antennas.

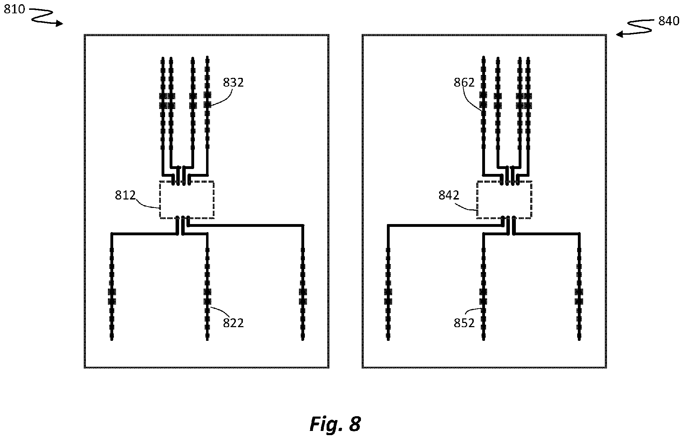

FIG. 8 shows a pair of antenna unit boards 810 and 840, each of which include a sparse transmit array and a sparse receiver array of antennas. In the example shown, the antennas may be, for instance, metallized tracks on a printed circuit board. Each board includes one pair of a first antenna (822 and 852 respectively) and second antenna (832 and 862 respectively) which are aligned in a first direction (left/right in the figure) and offset in a second direction (up/down in the figure). The figure also shows the outline of integrated circuit (IC) or silicon chip for each board (at 812 and 842 respectively). As discussed above, the processor functionality, that is to say the functionality to estimate phase noise, using radar signals transmitted by transmit antenna 822 and received by receive antenna 862, and signals transmitted by transmit antenna 852 and received by receive antenna 832, may be integral with either IC 812 or IC 842, or may be in a separate distinct unit.

The skilled person will appreciate that the ICs 812 and 842 generally includes some preprocessing of the received radar signals. This processing typically includes filtering and down conversion (to provide the beat frequencies), and may further include digitisation of the analog signals by a respective analogue to digital converter (ADC). The interfaces between the ICs and the processor, shown at 662 and 664 in FIG. 6, thus are typically digital interfaces, but in the absence of digitisation in the individual radar units, may be analogue interfaces, for example using waveguides.

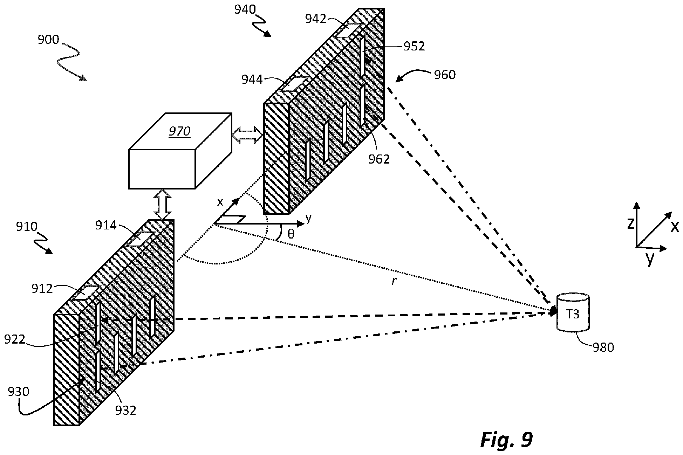

Turning now to FIG. 9, this shows, schematically, an isometric view of a radar system 900 according to one or more embodiments. The figure shows two radar units, 910 and 940 respectively, each of which include a single transmit antenna 922 and 952 respectively and an array of receive antennas 930 and 960 respectively. The system includes a processor 970, which as shown may be remote from both of the radar units 910 at 940. The radar units each include a local oscillator, 912 and 942 respectively and an IC, 914 and 944 respectively. Although the local oscillators are shown as distinct from the IC, the skilled person will appreciate that they may be integral. The radar unit 910 and 940 are aligned along a first direction "x". A target T3 980 is in the plane which is orthogonal to an antenna radiating surface of radar units, that is to say it is in the same "xy" plane as the units, where $y$ is the normal to the antenna radiating surface, also referred to as the "boresight". The target is at an angle 90°-θ (azimuth) to the normal $y$. As has already been explained, the two bistatic paths, that is to say the path "922 -T3 - 962" and the path "952 - T3 - 932" have equal path lengths.

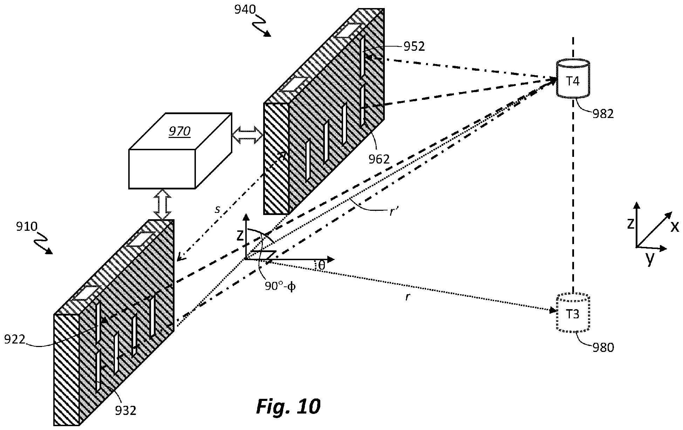

FIG. 10 shows schematically and isometric view of the radar system 900, detecting a target T4 982 which is in the same range r and azimuth θ as T3, but is not in the $xy$ plane of the radar units 910 and 940, that is to say, it has an elevation angle φ which is non-zero. In this situation the paths "922 -T4 - 962" and "952 - T4 - 932" do not have identical path lengths. However, it will be appreciated that the distance $r'$ between the target and the pair of radar units is significantly (>10, and normally >100 times) larger than the separation $s$ between the radar units, and so $r \simeq r'$, and $\phi \lesssim 3°$ although much larger elevation angles (up to 20° may be allowed). The present inventors have appreciated that for small values of φ, the difference between the two paths "922 -T4 - 962" and "952 - T4 - 932", is sufficiently small that the paths may be considered equal length, to a sufficient approximation.

In other words, there is a path length difference if the target has an elevation angle unequal to 0°. However, the Field of View (FoV) of the antenna elements is in the elevation direction generally designed to be small, eg < 3°, because a smaller FoV increases the gain of the antenna. Therefore, the observed elevation angles are also relatively small compared to the azimuth angles. Therefore, a small change in elevation from boresight will only result in a small path length difference. If the path length difference is small then also the difference in frequency is small. A small difference in frequency causes so-called intermodulation products that are sufficiently small that they do not appear as ghost targets above the thermal noise floor in the range-Doppler map after phase noise compensation and 2D FFT (fast Fourier transform) processing.

More precisely, an elevation angle unequal to 90° introduces a path length difference which result in a difference in (angular) frequency of $\Delta\omega$ between the beat signals in both radar units. Assuming two targets, one at boresight and the other with an elevation, then the received beat signals become:

$$x_1(t) = e^{j\text{pn}_{12}(t)} \left( e^{j\omega_{b1}t} + e^{j\omega_{b2}t} \right), \quad \text{and} \qquad (6)$$

$$x_2(t) = e^{j\text{pn}_{21}(t)} \left( e^{j\omega_{b1}t} + e^{j\Delta\omega t} e^{j\omega_{b2}t} \right). \qquad (7)$$

The output signal of the phase noise estimator then becomes:

$$\begin{aligned}
\psi(t) &= \arg\left( x_1(t) \ x_2(t)^* \right. \\
&= \arg\left( \left( e^{j(pn_{12}(t) - pn_{21}(t))} \right)\left( 1 + e^{j\Delta\omega t} e^{j(\omega_{b1}t - \omega_{b2}t)} + \right.\right. \\
&\qquad \left.\left. e^{-j(\omega_{b1}t - \omega_{b2}t)} + e^{-j\Delta\omega t} \right) \right), \qquad (8)
\end{aligned}$$

$$\neq \text{pn}_{12}(t) - \text{pn}_{21}(t) \qquad (9)$$

Simulation experiments showed that if $\Delta\omega$ is small that then the estimated phase noise signal is close to $pn_{12}$(t)-$pn_{21}$(t) and that no ghosts appear after phase noise compensation in the range Doppler map.

The illustrations of embodiments described herein are intended to provide a general understanding of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Although specific embodiments have been illustrated and described herein, it should be appreciated that any arrangement calculated or constructed to achieve the same or a similar purpose may be substituted for the specific embodiments shown. This disclosure is intended to cover any and all adaptations or variations of various embodiments. Combinations of the above embodiments, and other embodiments not specifically described herein, are contemplated by the subject disclosure.

For instance, one or more features or aspects from one or more embodiments can be combined with one or more features or aspects of one or more other embodiments. In one or more embodiments, features that are positively recited can also be negatively recited and excluded from the embodiment with or without replacement by another structural and/or functional feature.

Further, the use of numerical terms to describe a device, component, step or function, such as first, second, third, and so forth, is not intended to describe an order or function unless expressly stated so. The use of the terms first, second, third and so forth, is generally to distinguish between devices, components, steps or functions unless expressly stated otherwise. Additionally, one or more devices or components described with respect to the exemplary embodiments can facilitate one or more functions, where the facilitating (e.g., facilitating access or facilitating establishing a connection) can include less than every step needed to perform the function or can include all of the steps needed to perform the function.

The Abstract of the Disclosure is provided with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter may lie in fewer than all features of a single disclosed embodiment.

**Claims**

1. A distributed coherent radar, DCR, system comprising:

   a first radar unit, a second radar unit and a processer, wherein the first radar unit and the second radar unit each comprise:

      a first antenna and a second antenna, aligned in a first direction, and offset in a second direction which is orthogonal to the first direction; and
      a linear array of antennas distributed along the first direction, wherein a one of the first antenna and the second antenna forms part of the linear array;

   wherein:

      the second radar unit is configured to receive, at the second radar unit second antenna, a first signal, being a reflection, from a target, of a first frequency modulated continuous wave, FMCW, radar signal transmitted by the first radar unit first antenna;
      the first radar unit is configured to receive, at the first radar unit second antenna, a second signal, being a reflection, from the target, of a second FMCW radar signal transmitted by the second radar unit first antenna; and
      the processor is configured to estimate phase noise from the first signal and the second signal.

2. The DCR system of claim 1, wherein the antennas are each elongate along the second direction.

3. The DCR system of claim 1 or 2, configured to have an azimuth angle and an elevation angle, wherein the first direction is a tangent to the azimuth angle and the second direction is a tangent to the elevation angle.

4. The DCR system of claim 3, configured to operate over an azimuth angular range of at least 90°.

5. The DCR of any preceding claim, wherein the first radar unit and the second radar unit each comprise: a local oscillator.

6. The DCR of any preceding claim, wherein the processor is comprised in a one of the first radar unit and the second radar unit.

7. The DCR of any preceding claim, wherein
   the linear array of antennas is a sparse array.

8. The DCR of any preceding claim, wherein:

   the linear array of antennas is a row of a matrix array of antennas, and
   the further antenna is a one of a further row of the matrix array of antennas.

9. The DCR of claim 8, wherein:
   The matrix array has two rows.

10. The DCR of claim 8 or 9, wherein:
    The further row of the matrix array of antennas is a sparse array.

11. The DCR of any preceding claim, wherein:
    the linear array of antennas is an array of receive antennas.

12. The DCR of any preceding claim, wherein:
    the first and second radar units each comprise an integrated circuit configured to pre-process the respective first and second signal.

13. The DCR of claim 12, wherein:
    pre-processing the respective signal comprises down-converting the respective signal by mixing it with the respective FMCW radar signal.

14. The DCR of claim 13, wherein:
pre-processing the respective signal comprises sampling the down-converted signal by an analog-to-digital converter, ADC.

15. The DCR of any preceding claim, wherein:
the processor is configured to estimate the phase noise before determining a final range-Doppler map of candidate targets including the target.

16. A distributed coherent radar, DCR, system comprising:

a first radar unit, a second radar unit and a processer, wherein the first radar unit and
the second radar unit each comprise:

a local oscillator,
a linear array of antennas distributed along a first direction,
a further antenna aligned with a first antenna of the linear array of antennas along the first direction, and offset therefrom in a second direction which is orthogonal to the first direction;

wherein a first transmission path length between the first radar unit first antenna and the second radar unit further antenna, via a target, is equal to a second transmission path length between the second radar unit first antenna and the first radar unit further antenna, via the target.

100

110

120

112  114  116

126  124  122

**Fig. 1 (Prior Art)**

Tx

210  front-view

RX  TX

214  212

220

230  232

T1

240

232

T2

214  212  214  212

210  215  210  215

216  218  216  218

**Fig. 2 (prior art)**

Fig. 3 (Prior Art)

Fig. 4 (prior art)

**Fig. 5**

**Fig. 6**

**Fig. 7**

**Fig. 8**

Fig. 9

Fig. 10

Europäisches
Patentamt
European
Patent Office
Office européen
des brevets

# EUROPEAN SEARCH REPORT

**Application Number**

EP 24 20 0768

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 258 019 A1 (NXP BV [NL]) 11 October 2023 (2023-10-11) * figures 1,7,9 * * Equation 22 * * paragraph [0032] - paragraph [0034] * * paragraph [0037] * * paragraph [0050] * * paragraph [0070] * * paragraph [0087] - paragraph [0089] * * paragraph [0093] * | 1-16 | INV. G01S13/00 G01S13/34 G01S13/58 G01S13/87 G01S7/40 G01S13/931 |
| Y | ----- US 2022/094397 A1 (WU RYAN HAOYUN [US] ET AL) 24 March 2022 (2022-03-24) * figures 2,4,5 * * paragraph [0060] - paragraph [0061] * | 1-16 | |
| A | ----- DE 10 2021 200520 A1 (BOSCH GMBH ROBERT [DE]) 21 July 2022 (2022-07-21) * figure 4 * * page 16, line 21 - page 17, line 20 * | 1-16 | |
| A | ----- WO 2021/115984 A1 (VALEO SCHALTER & SENSOREN GMBH [DE]) 17 June 2021 (2021-06-17) * the whole document * ----- | 1-16 | **TECHNICAL FIELDS SEARCHED (IPC)** G01S H03D H03B |

The present search report has been drawn up for all claims

| Place of search | Date of completion of the search | Examiner |
|---|---|---|
| Munich | 23 January 2025 | Töpfer, Nils-Peter |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.......................................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 20 0768

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2025

| Patent document cited in search report | | Publication date | Patent family member(s) | | Publication date |
|---|---|---|---|---|---|
| EP 4258019 | A1 | 11-10-2023 | CN | 116893399 A | 17-10-2023 |
| | | | EP | 4258019 A1 | 11-10-2023 |
| | | | US | 2023314562 A1 | 05-10-2023 |
| US 2022094397 | A1 | 24-03-2022 | NONE | | |
| DE 102021200520 | A1 | 21-07-2022 | CN | 114814735 A | 29-07-2022 |
| | | | DE | 102021200520 A1 | 21-07-2022 |
| | | | JP | 2022112497 A | 02-08-2022 |
| | | | KR | 20220106059 A | 28-07-2022 |
| | | | US | 2022229167 A1 | 21-07-2022 |
| WO 2021115984 | A1 | 17-06-2021 | DE | 102019134304 A1 | 17-06-2021 |
| | | | WO | 2021115984 A1 | 17-06-2021 |

EPO FORM P0459